# EUROPÄISCHE PATENTANMELDUNG

(11) **EP 0 870 948 A2**
(43) Veröffentlichungstag der Anmeldung: **14.10.1998**
(21) Anmeldenummer: 97122656.8
(22) Anmeldetag: 22.12.1997
(51) Int. Cl.: F16F 13/10

(54) **Hydraulisch dämpfendes Lager**

(30) Priorität: 25.03.1997 DE 19712343
(71) Anmelder: Mannesmann Boge GmbH, 53175 Bonn-Bad Godesberg (DE)
(72) Erfinder: Mayer, Rudolf, 55497 Ellern (DE)

(57) **Zusammenfassung**

Hydraulisch dämpfendes Lager, bestehend aus einem Innenteil, einem mit Abstand dazu angeordneten Außenteil und einem dazwischen eingesetztem elastischen Element, in welchem mindestens eine mit Dämpfungsmittel gefüllte Kammer angeordnet ist, wobei das Außenteil in einem der Endbereiche mit mindestens einer Bohrung versehen ist und daß das elastische Element in diesem Bereich -bei nicht vollständig montiertem elastischen Element- einer mit der Kammer in Verbindung stehende Ausnehmung aufweist, wobei die Bohrung -bei vollständig montiertem elastischen Element- vom elastischen Element verschlossen ist.

## Beschreibung

Die Erfindung bezieht sich auf ein hydraulisch dämpfendes Lager, bestehend aus einem Innenteil, einem mit Abstand dazu angeordneten Außenteil und einem dazwischen eingesetztem elastischen Element, in welchem mindestens eine mit Dämpfungsmittel gefüllte Kammer angeordnet ist.

Bei derartigen bekannten Lagern, die als hydraulische Buchsen oder als hydraulische Motorlager ausgebildet sind, besteht das Problem in der einwandfreien Befüllung der Kammern mit einem Dämpfungsmittel. Es gibt dabei die Möglichkeit der Montage der Einzelteile, wobei das elastische Gummiteil zusammen mit dem Innenteil im trockenen Zustand in das Außenteil eingebracht wird und anschließend eine Befüllung des Dämpfungsmittels über ein Füllbohrung des Innenteiles erfolgt. Es sind hierbei teure Einzelteile notwendig, da die notwendige Füllbohrung im Innenteil angeordnet ist, so daß zusätzliche Bauteile, wie Kugel etc. zur Verschließung der Füllbohrung benötigt werden. Darüber hinaus ist von Nachteil, daß bei der trockenen Montage die Gefahr der Beschädigung von Dichtlippen des Gummi-Metall-Teiles extrem hoch ist.

Es gibt desweiteren hydraulisch dämpfende Lager, bei denen die Montage der Einzelteile in einem mit Dämpfungsflüssigkeit gefüllten Montagebecken erfolgt, das heißt die Teile werden in der Dämpfungsflüssigkeit unterhalb des Flüssigkeitsspiegels montiert. Hierbei ist von Nachteil, daß hohe Energieverluste auftreten, da die Lager nach der Montage in warmen Wasser äußerlich gewaschen werden müssen, dies führt desweiteren zu einer Umweltbelastung durch Verschleppung von Dämpfungsflüssigkeit nach der Montage. Darüber hinaus ist von Nachteil, daß bei Hinterschneidungen, Innenanschlägen oder Kanalteilen, die innerhalb der Dämpfungskammer angeordnet sind durch entsprechende Hinterschneidungen das Gefahr von Lufteinschlüssen in der Kammer besteht, so daß anschließend die Funktionsfähigkeit des Lagers nicht in der gewünschten Form vorhanden ist. Auch besteht das Problem, daß wichtige Bauteile während der Montage unter Flüssigkeit verloren gehen. Es handelt sich hierbei im wesentlichen um Kleinteile, wie z.B. Kanalteile oder Innenanschläge die bereits vorher auf einem der Bauteile montiert oder während der Montage unter Flüssigkeit eingelegt werden müssen.

Aufgabe der Erfindung ist es, ein hydraulisch dämpfendes Lager so zu gestalten, daß eine Befüllung mit Dämpfungsmittel sowie ein entsprechendes Verfahren hierzu einfach und sicher möglich ist.

Zur Lösung dieser Aufgabe ist erfindungsgemäß vorgesehen, daß das Außenteil in einem der Endbereiche mit mindestens einer Bohrung versehen ist und daß das elastische Element in diesem Bereich -bei nicht vollständig montiertem elastischen Element- einer mit der Kammer in Verbindung stehende Ausnehmung aufweist, wobei die Bohrung -bei vollständig montiertem elastischen Element- vom elastischen Element verschlossen ist.

Vorteilhaft ist hierbei, daß nach teilweise Einbringen des elastischen Elementes zusammen mit dem Innenteil in das Außenteil über die Bohrung zunächst der Innenraum der Kammer evakuiert werden kann und anschließend über die gleiche Bohrung ein Befüllen mit Dämpfungsmittel möglich ist. Der Außenbereich des elastischen Elementes dichtet dabei die Kammer gegenüber dem Außenteil ab, während nach vollständiger Montage des elastischen Elementes die Bohrung durch das elastische Element verschlossen werden kann.

Nach einem weiteren wesentlichen Merkmal ist vorgesehen, daß das elastische Element in jedem Endbereich mit einer radial nach außen und über den Umfang verlaufenden Dichtung versehen ist. Mit Vorteil ist hierbei die Dichtung Bestandteil des elastischen Elementes.

Eine günstige Ausführungsform sieht vor, daß zur Bildung der Ausnehmung axial zwischen der Kammer und dem Endbereich ein radial nach außen angeordneter umlaufender elastischer Bereich vorgesehen ist.

Zur Erziehung einer einfachen, kostengünstigen Verbindung zwischen Ausnehmung und der Kammer verläuft die Verbindung durch das elastische Element hindurch oder die Verbindung verläuft in der Innenwandung des Außenteiles, desweiteren kann die Verbindung auch durch mindestens einen abgeflachten Bereich des elastischen Elementes gebildet werden.

Nach einem Verfahren zur Befüllung des hydraulisch dämpfenden Lagers gemäß Anspruch 1 ist erfindungsgemäß vorgesehen, daß zunächst das elastische Element zusammen mit dem Innenteil so weit in das Außenteil eingebracht wird, daß die Bohrung mit der Ausnehmung korrespondiert, danach das Dämpfungsmittel durch die Bohrung, der Ausnehmung und der Verbindung in die Kammer eingebracht wird, anschließend wird das elastische Element in seine Endposition gebracht, in der auch die Bohrung durch das elastische Element verschlossen wird, bei Bedarf kann als letztes das Außenteil reduziert werden, das heißt der Durchmesser des Außenteiles wird verkleinert, so daß eine Kalibrierung, eine einwandfreie Abdichtung der Endbereiche und eine Vorspannung des Dämpfungsmittels erzielbar ist. Es ist durchaus denkbar, daß bei Bedarf das Außenteil, vor Einbringung des Dämpfungsmittels, im Durchmesser reduziert werden kann, um eine einwandfreie Abdichtung der Endbereiche zu erreichen.

Ein bevorzugtes Ausführungsbeispiel der Erfindung ist in der Zeichnung schematisch dargestellt.

Es zeigt:
Figur 1 ein teilweise montiertes Lager, teils geschnitten, im Befüllungszustand
Figur 2 ein vollständig montiertes Lager, bei dem die Bohrung durch das elastische Element verschlossen wird
Figur 3 eine Ansicht auf die Bohrung zur Befüllung.

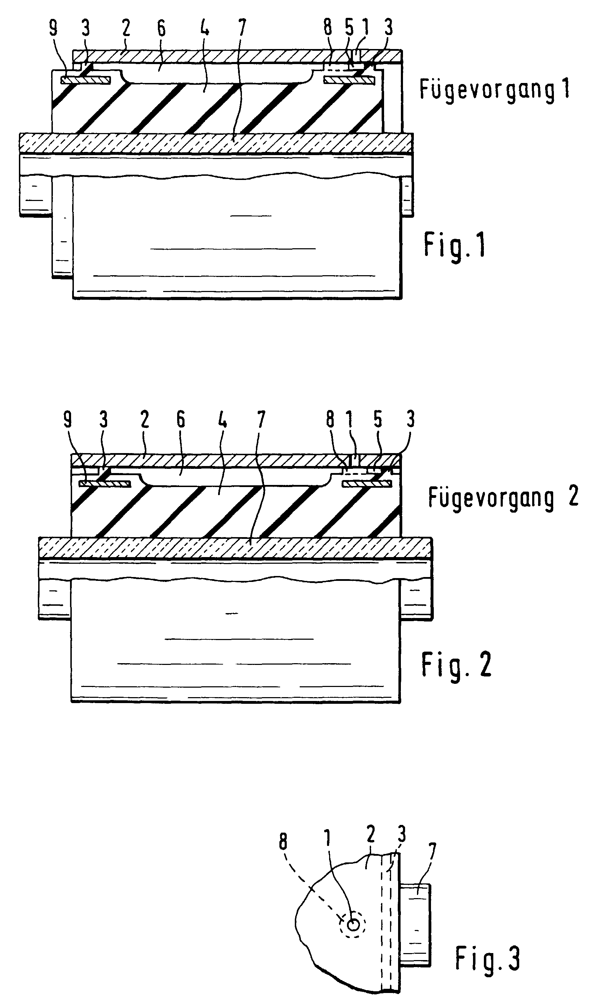

Bei dem in Figur 1 dargestellten Lager handelt es sich im wesentlichen um das Innenteil 7, das Außenteil 2 sowie einem dazwischen eingesetzten elastischen Element 4. Als elastisches Element 4 läßt sich ohne weiteres ein Gummiteil vorsehen. Das elastische Element 4 ist mit dem Innenteil 7 fest verbunden und wird zur Montage in ein Außenteil 2 eingeschoben. Durch die Dichtungen 3 des elastischen Elementes 4 im jeweiligen Endbereich ist in diesem teilweise montierten Zustand die Kammer 6 bereits gegen die Atmosphäre abgedichtet. Es lassen sich dabei über den Umfang verteilt mehrere Kammern 6 anordnen, je nach Konstruktion und Funktion des Lagers.

Die Bohrung 1 des Außenteiles 2 korrespondiert bzw. steht über einer Ausnehmung 5 mit der Kammer 6 in Verbindung. In dieser Position läßt sich der Innenraum der Kammer 6 evakuieren und anschließend über die Bohrung 1 mit Dämpfungsmittel befüllen. Nach dem Befüllen wird das elastische Element 4 zusammen mit dem Innenteil 7 axial weiter in das Außenteil 2 eingebracht, wie dies aus Figur 2 zu entnehmen ist.

In Figur 2 dichten zunächst wiederum die Dichtungen 3 die Kammer 6 gegenüber dem Außenteil 2 zur Atmosphäre hin ab. Der elastische Bereich 8 kommt gegenüber der Bohrung 1 zur Anlage und verschließt die Bohrung 1, so daß kein Dämpfungsmittel aus der Kammer 6 entweichen kann. Es läßt sich nun in einem weiteren Arbeitsgang der Außendurchmesser des Außenteiles 2 reduzieren, so daß einerseits der Außendurchmesser des Lagers kalibriert ist und andererseits die Dichtungen 3 als auch der elastische Bereich 8 derart vorgespannt ist, daß der gesamte Endbereich des elastischen Elementes 4 gegenüber der Innenwandung des Außenteiles 2 zur Anlage kommt. Die Armierungsringe 9 garantieren dabei die Stabilität des elastischen Elementes 4 in seinem jeweiligen Endbereich. Zur Kalibrierung des Außenteiles 2 bzw. Reduzierung des Außendurchmessers des Außenteiles 2 wird das gesamte Lager durch ein im Innendurchmesser konisch verlaufendes Werkzeug gepreßt oder es wird ein radiales Einengen eingesetzt. Es wird dabei gleichzeitig das Dämpfungsmittel in der Kammer 6 vorgespannt.

Die Ausnehmung 5 läßt sich als Kanal ausbilden, ebenfalls denkbar sind Abflachungen des elastischen Elementes 4 als auch Ausnehmungen in der Innenwandung des Außenteiles 2. Bei der Bohrung 1 sind gleichfalls über den Umfang verteilt mehrere Bohrungen denkbar.

Die Figur 3 zeigt eine Draufsicht als Einzelheit, bei der die Bohrung 1 im Außenteil 2 angeordnet ist. Die Dichtung 3 ist über dem Umfang des elastischen Elements 4 vorgesehen, so daß bei Befüllung der Kammer 6 kein Dämpfungsmittel austreten kann.

### Bezugszeichenliste

- 1: - Bohrung
- 2: - Außenteil
- 3: - Dichtung
- 4: - elastisches Element
- 5: - Ausnehmung
- 6: - Kammer
- 7: - Innenteil
- 8: - elastischer Bereich
- 9: - Armierungsring

## Patentansprüche

1. Hydraulisch dämpfendes Lager, bestehend aus einem Innenteil, einem mit Abstand dazu angeordneten Außenteil und einem dazwischen eingesetztem elastischen Element, in welchem mindestens eine mit Dämpfungsmittel gefüllte Kammer angeordnet ist,
dadurch gekennzeichnet,
daß das Außenteil (2) in einem der Endbereiche mit mindestens einer Bohrung (1) versehen ist und daß das elastische Element (4) in diesem Bereich -bei nicht vollständig montiertem elastischen Element (4)- einer mit der Kammer (6) in Verbindung stehende Ausnehmung (5) aufweist, wobei die Bohrung (1) -bei vollständig montiertem elastischen Element (4)- vom elastischen Element (4) verschlossen ist.

2. Lager nach Anspruch 1,
dadurch gekennzeichnet,
daß das elastische Element (4) in jedem Endbereich mit einer radial nach außen und über den Umfang verlaufenden Dichtung (3) versehen ist.

3. Lager nach Anspruch 2,
dadurch gekennzeichnet,
daß die Dichtung (3) Bestandteil des elastischen Elementes (4) ist.

4. Lager nach Anspruch 1,
dadurch gekennzeichnet,
daß zur Bildung der Ausnehmung (5) axial zwischen der Kammer (6) und dem Endbereich ein radial nach außen angeordneter umlaufender elastischer Bereich (8) vorgesehen ist.

5. Lager nach Anspruch 1,
dadurch gekennzeichnet,
daß die Verbindung zwischen Ausnehmung (5) und Kammer (6) durch das elastische Element (4) hindurchverläuft.

6. Lager nach Anspruch 1,
dadurch gekennzeichnet,
daß die Verbindung zwischen Ausnehmung (5) und Kammer (6) in der Innenwandung des Außenteiles (2) verläuft.

7. Lager nach Anspruch 1,
dadurch gekennzeichnet,
daß zur Bildung der Verbindung das elastische Element (4) mit mindestens einem abgeflachten Bereich versehen ist.

8. Verfahren zur Befüllung eines hydraulisch dämpfenden Lager,
dadurch gekennzeichnet,
daß zunächst das elastische Element (4) zusammen mit dem Innenteil (7) so weit in das Außenteil (2) eingebracht wird, daß die Bohrung (1) mit der Ausnehmung (5) korrespondiert, danach das Dämpfungsmittel durch die Bohrung (1), der Ausnehmung (5) und der Verbindung in die Kammer (6) eingebracht wird, anschließend wird das elastische Element (4) in seine Endposition gebracht, in der auch die Bohrung (1) durch das elastische Element (4) verschlossen wird, bei Bedarf kann als letztes das Außenteil (2) reduziert werden, das heißt der Durchmesser des Außenteiles (2) wird verkleinert, so daß eine Kalibrierung, eine einwandfreie Abdichtung der Endbereiche und eine Vorspannung des Dämpfungsmittels erzielbar ist.
